# EUROPÄISCHE PATENTSCHRIFT

(11) **EP 2 583 003 B1**
(45) Veröffentlichungstag und Bekanntmachung des Hinweises auf die Patenterteilung: **15.01.2014**
(21) Anmeldenummer: 11725881.4
(22) Anmeldetag: 15.06.2011
(51) Int. Cl.: B60T 7/08, B60T 7/10, F16H 59/08, F16H 63/34, F16H 3/48, G05G 1/04, B60K 20/02, B60R 25/04, F16H 59/02, F16H 63/48

(54) **VORRICHTUNG ZUR BEDIENUNG VON FUNKTIONEN EINES KRAFTFAHRZEUGS**
DEVICE FOR OPERATING FUNCTIONS OF A MOTOR VEHICLE
DISPOSITIF DE COMMANDE DE FONCTIONS D'UN VÉHICULE À MOTEUR

(30) Priorität: 19.06.2010 DE 102010024388
(43) Veröffentlichungstag der Anmeldung: 24.04.2013
(73) Patentinhaber: Audi AG, 85045 Ingolstadt (DE)
(72) Erfinder: TOVAR, Johannes, 85049 Ingolstadt (DE); BEIERLEIN, Ulrich, 85051 Ingolstadt (DE)
(74) Vertreter: Brandt, Kai
(86) Internationale Anmeldenummer: PCT/EP2011/002931
(87) Internationale Veröffentlichungsnummer: WO 2011/157405

(56) Entgegenhaltungen:
- WO-A1-2009/018823
- WO-A2-2010/039845
- GB-A- 2 460 659
- US-A- 2 722 578

## Beschreibung

### Vorrichtung zur Bedienung von Funktionen eines Kraftfahrzeugs

Die Erfindung betrifft eine Vorrichtung zur Bedienung von Funktionen eines Kraftfahrzeugs nach der im Oberbegriff von Anspruch 1 näher definierten Art.

Eine gattungsgemäße Vorrichtung ist aus der WO 2010/039845 A2 bekannt. Hierbei sind an einem Schaltwählhebel mehrere Betätigungsknöpfe angebracht, die unter anderem zum Starten des Motors oder zum Betätigen der Parkbremse dienen können.

Die GB 2 460 659 A beschreibt einen Betätigungshebel für ein Fahrzeug, der zwischen mehreren Positionen verstellt werden kann. An dem Betätigungshebel sind mehrere Schalter angebracht, die insbesondere hydraulischen Funktionen des Fahrzeugs zugeordnet sind.

In der US 2 722 578 A ist ein Betätigungsknopf zum Starten eines Motors eines Kraftfahrzeugs beschrieben. Dieser kann an einem mit der Lenksäule verbundenen Schalthebel angebracht sein.

Die WO 2009/018823 A1 beschreibt eine gattungsgemäße Betätigungseinrichtung zur Auswahl von Schaltstufen eines Getriebes, bei dem auf einem Gangwahlelement ein Betätigungselement zur Aktvierung einer Parksperre angeordnet ist.

Eine Fahrerassistenzvorrichtung ist aus der DE 11 2007 002 128 T5 bekannt. Diese Vorrichtung weist einen Gangschalthebel, also ein Bedienelement zur Steuerung des Getriebes des Kraftfahrzeugs auf, der unter anderem mit einer Feststelleinrichtung zum Aktivieren oder Deaktivieren der Betätigung von Funktionen des Gangschalthebels versehen ist.

Ein großes Problem moderner Kraftfahrzeuge ist die Vielzahl unterschiedlicher Bedienelemente, die im Innenraum des Kraftfahrzeugs angeordnet sind, um die ver-schiedensten Funktionen desselben zu bedienen. Dies führt zu einem erheblichen Platzverbrauch sowie zu einer meist sehr schwierigen Bedienbarkeit der einzelnen Funktionen, da die Bedienelemente häufig nicht logisch angeordnet sind.

Es ist Aufgabe der vorliegenden Erfindung, eine Vorrichtung zur Bedienung von Funktionen eines Kraftfahrzeugs zu schaffen, welche eine Unterstützung bei der oben beschriebenen Problematik hinsichtlich der Verteilung von Bedienelementen innerhalb eines Kraftfahrzeugs bietet.

Erfindungsgemäß wird diese Aufgabe durch die in Anspruch 1 genannten Merkmale gelöst.

Durch die Anordnung eines Schaltelements zum Betätigen und Lösen einer Parkbremse des Kraftfahrzeugs an dem zur Steuerung des Getriebes dienenden Bedienelement ergibt sich eine Bündelung der Bedienelemente, die zur Steuerung der wichtigsten Fahrfunktionen des Kraftfahrzeugs dienen. Da der Fahrer sowohl beim Anfahren als auch beim Abstellen des Kraftfahrzeugs das Bedienelement zur Steuerung des Getriebes ohnehin betätigen muss, stellt die Anordnung des zum Betätigen und Lösen der Parkbremse dienenden Schaltelements an eben diesem Bedienelement für den Fahrer eine sehr einfache Möglichkeit dar, beim Abstellen des Kraftfahrzeugs gleichzeitig auch die Parkbremse zu betätigen.

Ein durch die Erfindung des weiteren erzielter Vorteil ist darin zu sehen, dass für das zum Betätigen und/oder Lösen der Parkbremse dienende Schaltelement kein zusätzlicher Bauraum verbraucht wird, da sich an dem zur Steuerung des Getriebes dienenden Bedienelement üblicherweise keine zusätzlichen Schalter oder dergleichen befinden, sodass dieser Ort problemlos genutzt werden kann. Der durch die Anordnung des Schaltelements zum Betätigen und/oder Lösen der Parkbremse an dem zur Steuerung des Getriebes dienenden Bedienelement frei werdende Platz in der Mittelkonsole kann durch andere Bauteile, wie zum Beispiel einen Cupholder oder dergleichen, besser genutzt werden.

Um dem Fahrer eine optische Anzeige hinsichtlich des Betätigungszustands der Parkbremse zu geben, ist des Weiteren vorgesehen, dass sich das Schaltelement abhängig davon, ob die Parkbremse betätigt oder gelöst ist, in unterschiedlichen Stellungen befindet.

Vorteilhafte Ausgestaltungen und Weiterbildungen der Erfindung ergeben sich aus den restlichen Unteransprüchen. Nachfolgend sind Ausführungsbeispiele der Erfindung anhand der Zeichnung prinzipmäßig dargestellt.

Es zeigt:
- Fig. 1: eine erfindungsgemäße Vorrichtung in einem ersten Zustand;
- Fig. 2: die Vorrichtung aus Fig. 1 in einem zweiten Zustand;
- Fig. 3: eine Seitenansicht der Vorrichtung gemäß dem Pfeil III aus Fig. 1; und
- Fig. 4: eine alternative Ausführungsform der Vorrichtung in dem Zustand gemäß Fig. 2.

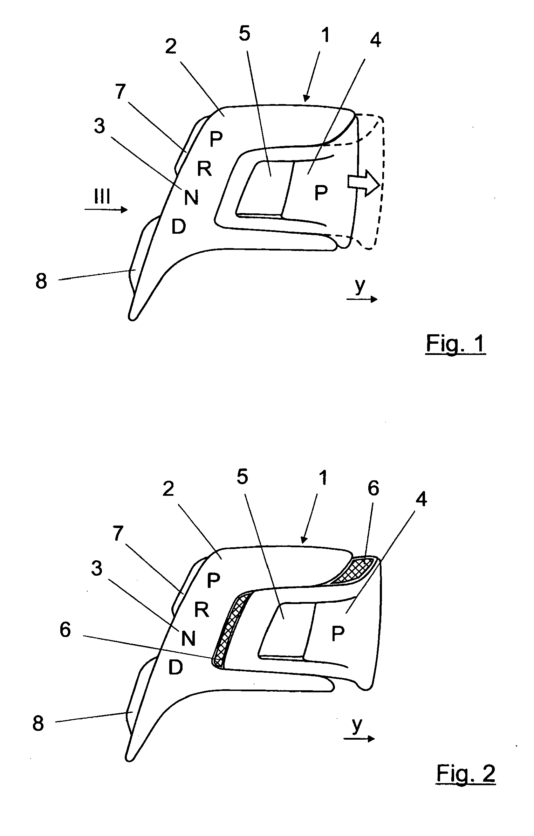

Fig. 1 zeigt eine Vorrichtung 1 zur Bedienung verschiedener Funktionen eines Kraftfahrzeugs, welches ein zur Steuerung eines nicht dargestellten Getriebes des Kraftfahrzeugs dienendes Bedienelement 2 aufweist. Zum Anwählen der im vorliegenden Fall vier einzelnen, mit "P", "R", "N" und "D" bezeichneten Fahrstufen des Getriebes wird das Bedienelement 2, das auch als Fahrstufenwählelement oder Schalthebel bezeichnet werden kann, in an sich bekannter Weise in der mit "x" bezeichneten Längsrichtung des Kraftfahrzeugs bewegt. Im dargestellten Ausführungsbeispiel ist vorgesehen, dass sich das Bedienelement 2 nach dem Anwählen einer Fahrstufe wieder in eine Mittelstellung zurück bewegt. Es handelt sich also um ein sogenanntes monostabiles Bedienelement 2. Allerdings kann in einer nicht dargestellten Ausführungsform auch vorgesehen sein, dass das Bedienelement 2 in an sich bekannter Weise innerhalb einer Schaltgasse oder -kulisse verschoben werden kann. Die Wahl des jeweiligen Gangs kann im vorliegenden Fall über nicht dargestellte Hebel an einem Lenkrad des Kraftfahrzeugs oder, bei entsprechender Ausführung des Bedienelements 2, auch durch das Bedienelement 2 selbst erfolgen.

Im dargestellten Ausführungsbeispiel weist das Bedienelement 2 keine mechanische Verbindung zu dem Getriebe auf, es handelt sich vorzugsweise um ein sogenanntes Shift-by-wire-Getriebe. Im seitlichen Bereich des Bedienelements 2 ist eine Anzeige 3 angebracht, in welcher die jeweils eingelegte Fahrstufe des Getriebes angezeigt wird. Die Anzeige 3 für die Fahrstufen kann alternativ auch an der Oberseite des Bedienelements 2 und/oder in einer Anzeige innerhalb des nicht dargestellten Armaturenbretts vorgesehen sein. Prinzipiell könnte es sich bei dem Bedienelement 2 auch um den Gangwählhebel eines Handschaltgetriebes handeln.

Im oberen Bereich des Bedienelements 2 ist ein Schaltelement 4 zum Betätigen und/oder Lösen einer Parkbremse, insbesondere einer elektronischen Parkbremse, des Kraftfahrzeugs vorgesehen. In der Darstellung von Fig. 1 befindet sich das Schaltelement 4 in einem ersten Zustand, in dem die Parkbremse gelöst ist. Ein Hohlraum 5 in dem Schaltelement 4 dient zum Eingriff und sorgt für eine leichte Betätigung desselben, zu der das Schaltelement 4 seitlich nach außen in Richtung des Pfeils "y" gedrückt wird.

Fig. 2 zeigt das Schaltelement 4 zum Betätigen und/oder Lösen der Parkbremse in einem zweiten Zustand, in dem die Parkbremse betätigt ist. Es ist dabei zu erkennen, dass sich das Schaltelement 4 im betätigten Zustand der Parkbremse in einer anderen Stellung befindet als im unbetätigten Zustand derselben, d.h. zwischen diesen beiden Stellungen besteht ein Unterschied in der mechanischen Anordnung des Schaltelements 4. Des weiteren geht aus Fig. 2 hervor, dass sich in der dem betätigten Zustand der Parkbremse entsprechenden Stellung des Schaltelements 4 ein Teil des Schaltelements 4 außerhalb des Bedienelements 2 befindet, wodurch für die Insassen des Kraftfahrzeugs optisch signalisiert wird, dass die Parkbremse betätigt und das Kraftfahrzeug nicht fahrbereit ist. Des weiteren weist das Schaltelement 4 wenigstens eine, im vorliegenden Fall zwei insbesondere farbig ausgeführte Markierungen 6 auf, welche sich in der dem betätigten Zustand der Parkbremse entsprechenden Stellung des Schaltelements 4 in einer sichtbaren Position außerhalb des Bedienelements 2 befinden. Demgegenüber ist die Markierung 6 in der Stellung gemäß Fig. 1 von außen nicht zu erkennen. Die Markierung 6 verstärkt dadurch das oben beschriebene optische Signal des betätigten Zustands des Schaltelements 4. Zum Lösen der Parkbremse wird das Schaltelement 4 wieder nach innen in den ersten Zustand gemäß Fig. 1 gedrückt.

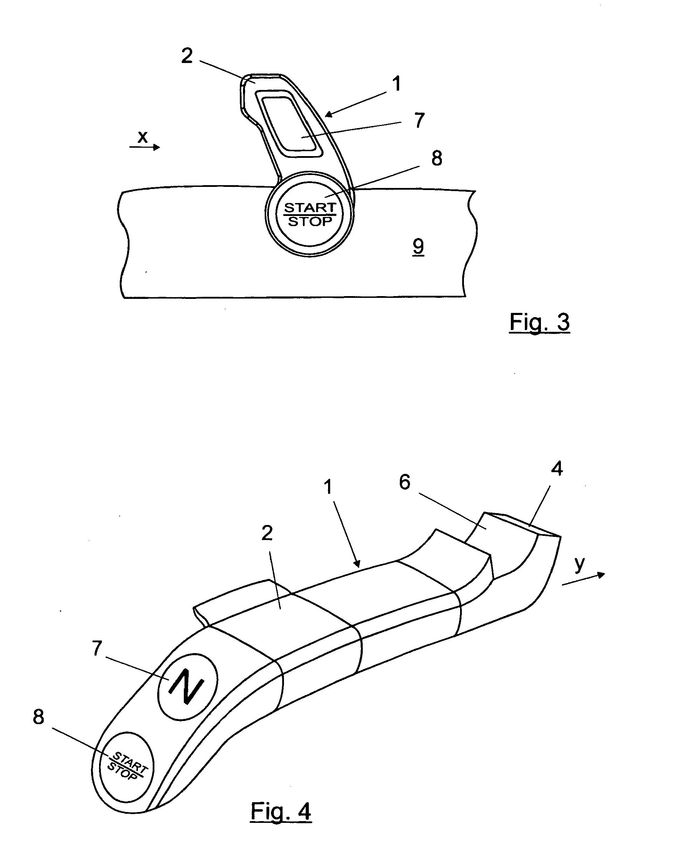

Wie in Fig. 3 ersichtlich, weist das Bedienelement 2 der Vorrichtung 1 eine in diesem Fall in einem seitlichen Bereich desselben angeordnete Taste 7 für die Freigabe der Schaltfunktionen auf, welche vor dem Auswählen einer Fahrstufe mittels des Bedienelements 2 betätigt werden muss. Erst nach dieser Betätigung kann mit dem Bedienelement 2 eine Fahrstufe gewählt werden. Gegebenenfalls kann auf die Taste 7 auch verzichtet werden.

In das Bedienelement 2 der Vorrichtung 1 ist ein weiteres Schaltelement 8 zum Starten und/oder Stoppen eines Antriebsmotors des Kraftfahrzeugs integriert, dessen Funktion in an sich bekannter Weise ausgeführt sein kann. Vorteilhaft ist, dass sich somit alle zur Bedienung der wichtigsten Fahrfunktionen des Kraftfahrzeugs erforderlichen bzw. verwendeten Bedienschalter in unmittelbarer Nähe zueinander befinden, wodurch die Bedienung einerseits erleichtert wird und andererseits mehr Platz im Bereich einer Mittelkonsole 9, auf der die Vorrichtung 1 angeordnet ist, zur Verfügung steht. In einer nicht dargestellten Ausführungsform der Vorrichtung 1 kann auf eines der beiden Schaltelemente 4 oder 8 verzichtet werden.

In Fig. 4 ist eine alternative Ausführungsform der Vorrichtung 1 dargestellt, in welcher das Bedienelement 2 zur Steuerung des Getriebes in Form eines Griffs ausgebildet ist. An der dem Fahrer zugewandten Seite des Bedienelements 2 befindet sich in diesem Fall die Taste 7 für die Freigabe der Schaltfunktionen. Unterhalb der Taste 7 ist das Schaltelement 8 zum Starten und/oder Stoppen des Antriebsmotors des Kraftfahrzeugs angeordnet. Das Schaltelement 4 zum Betätigen und/oder Lösen der Parkbremse befindet sich an der gegenüberliegenden Seite und wird analog zu der unter Bezugnahme auf die Figuren 1 bis 3 beschriebenen Ausführungsform betätigt.

In einer insbesondere für Elektrokraftfahrzeuge vorteilhaften Ausführungsform der Erfindung kann das Anwählen der Fahrstufe "P" für "Parken" mittels des Bedienelements 2 dazu führen, dass das Schaltelement 4 zum Betätigen und Lösen der Parkbremse automatisch betätigt wird und der Antriebsmotor des Kraftfahrzeugs automatisch stoppt. Ein unerwünschtes Starten des Antriebsmotors, beispielsweise verursacht durch einen Kurzschluss, wird dadurch verhindert.

## Patentansprüche

1. Vorrichtung (1) zur Bedienung von Funktionen eines Kraftfahrzeugs, mit einem zur Steuerung eines Getriebes des Kraftfahrzeugs dienenden Bedienelement (2), wobei an dem Bedienelement (2) ein Schaltelement (4) zum Betätigen und/oder Lösen einer Parkbremse des Kraftfahrzeugs angeordnet ist, wobei sich das Schaltelement (4) abhängig davon, ob die Parkbremse betätigt oder gelöst ist, in unterschiedlichen Stellungen befindet, und wobei in der dem betätigten Zustand der Parkbremse entsprechenden Stellung des Schaltelements (4) sich ein Teil des Schaltelements (4) außerhalb des Bedienelements (2) befindet,
**dadurch gekennzeichnet, dass**
das Schaltelement (4) eine Markierung (6) aufweist, welche sich in der dem betätigten Zustand der Parkbremse entsprechenden Stellung des Schaltelements (4) in einer sichtbaren Position außerhalb des Bedienelements (2) befindet.

2. Vorrichtung nach Anspruch 1,
**dadurch gekennzeichnet, dass**
das Schaltelement (4) zum Betätigen und/oder Lösen der Parkbremse einen Hohlraum (5) aufweist, der zum Eingreifen in das Schaltelement (4) und zur Verschiebung desselben gegenüber dem Bedienelement (2) dient.

3. Vorrichtung nach Anspruch 1 oder 2,
**dadurch gekennzeichnet, dass**
an dem Bedienelement (2) ein Schaltelement (8) zum Starten und/oder Stoppen eines Antriebsmotors des Kraftfahrzeugs angeordnet ist.

4. Vorrichtung nach einem der Ansprüche 1 bis 3,
**dadurch gekennzeichnet; dass**
das Bedienelement (2) keine mechanische Verbindung zu dem Getriebe aufweist.

5. Vorrichtung nach einem der Ansprüche 1 bis 4,
**dadurch gekennzeichnet, dass**
das Bedienelement (2) so ausgebildet ist, dass es nach der Betätigung der unterschiedlichen Steuerungspositionen in eine Mittelstellung zurückkehrt.

## Claims

1. Device (1) for operating functions of a motor vehicle, having an operating element (2) serving to control a gear of the motor vehicle, wherein a switching element (4) for actuating and/or releasing a parking brake of the vehicle is disposed on the operating element, the switching element (4) being in different positions depending on whether the parking brake has been actuated or released, and wherein, in the position of the switching element (4) corresponding to the actuated state of the parking brake, part of the switching element (4) is located outside the operating element (2),
**characterised in that** the switching element (4) comprises a marking (6) which is located in a visible position outside the operating element (2), in the position of the switching element (4) corresponding to the actuated state of the parking brake.

2. Device according to claim 1, **characterised in that** the switching element (4) comprises, for the actuation and/or release of the parking brake, a cavity (5) which serves for engagement in the switching element (4) and for the movement of the latter relative to the operating element (2).

3. Device according to claim 1 or 2, **characterised in that** a switching element (8) for starting and/or stopping a drive motor of the vehicle is disposed on the operating element (2).

4. Device according to one of claims 1 to 3, **characterised in that** the operating element (2) does not have a mechanical connection to the gear.

5. Device according to one of claims 1 to 4, **characterised in that** the operating element (2) is configured such that after actuation of the different control positions it returns to a central position.

## Revendications

1. Dispositif (1) pour la commande de fonctions d'un véhicule automobile, avec un élément de commande (2) servant à commander une boîte de vitesses du véhicule automobile, un élément de commutation (4) pour l'actionnement et/ou le relâchement d'un frein de stationnement du véhicule automobile étant agencé sur l'élément de commande (2), l'élément de commutation (4) se trouvant dans différentes positions selon que le frein de stationnement est actionné ou relâché et une partie de l'élément de commutation (4) se trouvant en dehors de l'élément de commande (2) lorsque l'élément de commutation (4) est dans la position correspondant à l'état actionné du frein de stationnement,
**caractérisé en ce que** l'élément de commutation (4) comporte un repère (6) qui se trouve dans une position visible en dehors de l'élément de commande (2) lorsque l'élément de commutation (4) est dans la position correspondant à l'état actionné du frein de stationnement.

2. Dispositif selon la revendication 1, **caractérisé en ce que**, pour l'actionnement et/ou le relâchement du frein de stationnement, l'élément de commutation (4) comporte un espace creux (5) qui sert à venir en prise dans l'élément de commutation (4) et à déplacer celui-ci par rapport à l'élément de commande (2).

3. Dispositif selon la revendication 1 ou 2, **caractérisé en ce qu'**un élément de commutation (8) destiné au démarrage et/ou à l'arrêt d'un moteur d'entraînement du véhicule automobile est agencé sur l'élément de commande (2).

4. Dispositif selon l'une des revendications 1 à 3, **caractérisé en ce que** l'élément de commande (2) ne comporte pas de liaison mécanique vers la boîte de vitesses.

5. Dispositif selon l'une des revendications 1 à 4, **caractérisé en ce que** l'élément de commande (2) est conçu de telle sorte que, après l'actionnement des différentes positions de commande, il revient dans une position médiane.
